# EUROPÄISCHE PATENTANMELDUNG

(11) **EP 1 837 209 A1**
(43) Veröffentlichungstag der Anmeldung: **26.09.2007**
(21) Anmeldenummer: 07005190.9
(22) Anmeldetag: 13.03.2007
(51) Int. Cl.: B60D 1/46, B60D 1/06, B60D 1/07

(54) **Kupplungssystem für ein Zugfahrzeug und einen Anhänger**

(30) Priorität: 14.03.2006 DE 202006004188 U
(71) Anmelder: Sauermann, Hans, D-86558 Freinhausen (DE)
(72) Erfinder: Sauermann, Hans, D-86558 Freinhausen (DE)
(74) Vertreter: Witzany, Manfred

(57) **Zusammenfassung**

Ein Kupplungssystem (1) für ein Zugfahrzeug, insbesondere einen Ackerschlepper und einen Anhänger weist eine Deichsel (28) auf. Das Kupplungssystem (1) ist dabei mit einer Tragplatte (2) ausgerüstet, die höhenverstellbar am Zugfahrzeug abgestützt ist. Diese Tragplatte (2) trägt einen Kugelkopf (11), der mit einer an der Deichsel (28) festgelegten Kalotte (12) verbindbar ist. Zur Erzielung einer verbesserten Funktionalität dieses Kupplungssystems (1) ist an der höhenverstellbaren Tragplatte (2) mindestens ein Kupplungskopf (20) abgestützt, der mit einem anhängerseitigen Kupplungsglied (23) verbindbar ist. Dieses Kupplungsglied (23) steht mit einer Lenkung des Anhängers in Wirkverbindung, um auf diese Weise eine Zwangslenkung zu realisieren.

## Beschreibung

Aus der DE 20 2005 017 374.6 U1 ist eine Anhängerkupplung für einen Ackerschlepper bekannt. Diese Anhängerkupplung weist eine höhenverstellbare Tragplatte auf, an der ein Kugelkopf abgestützt ist. Dieser Kugelkopf ist von einer Kugelkalotte erfaßbar, welche an einer Anhängerdeichsel festgelegt ist. Diese Anhängerkupplung hat sich in der Praxis gut bewährt und bildet den Ausgangspunkt der vorliegenden Erfindung.

Der Erfindung liegt die Aufgabe zugrunde, ein Kupplungssystem der eingangs genannten Art zu schaffen, welches sich durch eine verbesserte Funktionalität auszeichnet.

Diese Aufgabe wird erfindungsgemäß mit den Merkmalen des Patentanspruchs 1 gelöst.

Das Kupplungssystem gemäß Anspruch 1 umfaßt einen zugfahrzeugseitigen Kugelkopf und eine anhängerseitige Deichsel, die mit einer Kalotte ausgerüstet ist. Der Kugelkopf ist dabei an einer Tragplatte höhenverstellbar zum Zugfahrzeug abgestützt, um eine Anpassung an unterschiedliche Deichselhöhen zu gewährleisten. Ein Kugelkopf bietet den Vorteil einer praktisch spielfreien Kraftübertagung und führt damit zu einem erhöhten Fahrkomfort bei angehängtem Anhänger. Insbesondere bei schweren Anhängern läßt deren Kurvenläufigkeit recht zu wünschen übrig. Dies ist insbesondere beim Rückwärtsrangieren von erheblicher Bedeutung. Aus diesem Grund weist der Anhänger eine Lenkung auf, die mit einem Kupplungsglied verbunden ist. Dieses Kupplungsglied ist mit mindestens einem zugfahrzeugseitigen Kupplungskopf verbindbar, so daß bei Kurvenfahrten über diese Verbindung eine Schub- bzw. Zugbewegung auf die Lenkung des Anhängers ausgeübt wird. Auf diese Weise ergibt sich eine Zwangslenkung des Anhängers, die die Kurvenläufigkeit des Anhängers erheblich verbessert. Der zugfahrzeugseitige Kupplungskopf ist dabei an der höhenverstellbaren Tragplatte abgestützt, um eine exakte Übertragung der Lenkkräfte in jeder beliebigen Höhenlage des Kugelkopfes zu gewährleisten. Die Anhängerdeichsel und die Zusatzdeichsel für die Zwangslenkung sind daher von der Seite her betrachtet in Projektion gesehen parallel zueinander oder schließen einen lenkungsunabhängigen Winkel ein, so daß die wirkenden Lenkkräfte ausschließlich vom befahrenden Kurvenradius und nicht von der gewählten Höhenlage der Tragplatte abhängen.

Gemäß Anspruch 2 ist es vorteilhaft, wenn der Kupplungskopf von einer Kugel und das Kupplungsglied von einer Kalotte gebildet ist. Auf diese Weise können die Lenkkräfte auf den Anhänger besonders präzise übertragen werden. Grundsätzlich ist daran gedacht, für die Übertragung der Lenkkräfte eine kleinere Kugel als für die Anhängerdeichsel einzusetzen, da die zu übertragenden Kräfte auch entsprechend geringer sind.

Gemäß Anspruch 3 ist es günstig, wenn der Kupplungskopf lösbar an der Tragplatte befestigt ist. Damit kann der Kupplungskopf entfernt werden, falls er nicht benötigt wird. Dies kann beispielsweise der Fall sein, wenn ein Anhänger ohne Zwangslenker oder ein Arbeitsgerät, wie beispielsweise ein Pflug an das Zugfahrzeug gekoppelt wird. Durch die lösbare Befestigung des Kupplungskopfs ergibt sich rund um den Kupplungsbereich ein entsprechend vergrößerter Freiraum, so daß die Zugänglichkeit von Anschlüssen, beispielsweise für Hydraulik- oder Pneumatiksysteme erleichtert wird.

Gemäß Anspruch 4 ist es vorteilhaft, wenn der Kupplungskopf wahlweise links- oder rechtsseitig an der Tragplatte festlegbar ist. Damit können Anhänger mit links- und rechtsseitiger Zwangslenkung eingesetzt werden, ohne zwei Kupplungsköpfe für die Zwangslenkung erforderlich zu machen.

Alternativ ist es gemäß Anspruch 5 günstig, wenn zwei Kupplungsköpfe beidseitig zum Kupplungskopf vorgesehen sind. Dies erhöht zwar den konstruktiven Aufwand des Kupplungssystems, ein Wechsel von links- auf rechtsseitige Zwangslenkungen ist jedoch ohne Veränderung des Kupplungssystems möglich. Diese Variante wird insbesondere in jenen Fällen bevorzugt, in denen das Zugfahrzeug im wesentlichen nur Anhänger ziehen soll, so daß nur wenige heckseitige Anschlüsse des Zugfahrzeugs benötigt werden. In diesem Fall spielt die Beeinträchtigung des Freiraums am Fahrzeugheck des Zugfahrzeugs nur eine untergeordnete Rolle.

Um eine größere Zahl von Anhängertypen mit dem Zugfahrzeug ziehen zu können, ist es gemäß Anspruch 6 vorteilhaft, wenn der Kupplungskopf und/oder der Kugelkopf an einer Anbauplatte gehalten ist, die an der Tragplatte festgelegt ist. Damit kann das gesamte Kupplungssystem sehr leicht ausgetauscht werden, wobei die Höhenverstellung der Tragplatte erhalten bleibt. Ein Wechsel auf beispielsweise eine Bolzen- oder Pitonkupplung ist dabei problemlos möglich.

Um die hohen Zugkräfte zum Ziehen des Anhängers bewältigen zu können, ist es gemäß Anspruch 7 günstig, wenn die Anbauplatte über eine Schraub- oder Stiftverbindung an der Tragplatte gehalten ist. Außerdem ist auf diese Weise ein einfaches Wechseln der Anbauplatte und damit des Kupplungssystems möglich.

Um die Kupplungsverbindung während der Fahrt zu sichern, ist es gemäß Anspruch 8 vorteilhaft, wenn die Anbauplatte mindestens eine Sicherung für das Kupplungsglied und/oder den Kugelkopf trägt.

Der Erfindungsgegenstand ist beispielhaft anhand der Zeichnung erläutert, ohne den Schutzumfang zu beschränken.

Es zeigt:
- Figur 1: eine teilweise geschnittene Darstellung einer Anhängerkupplung von hinten und
- Figur 2: eine zugeordnete teilweise geschnittene Darstellung der Anhängerkupplung gemäß Figur 1 von oben.

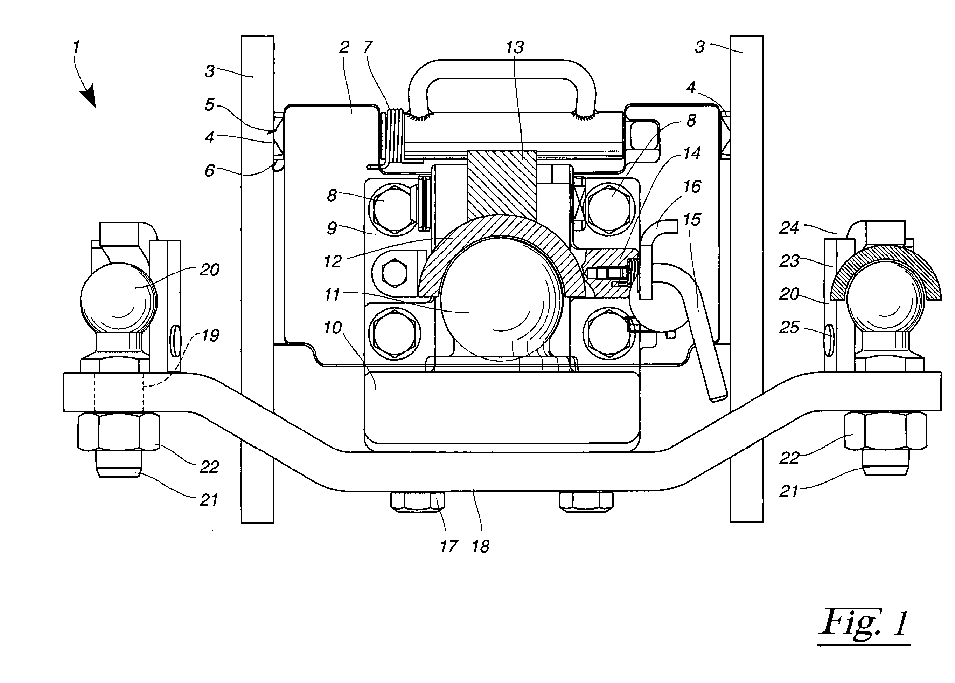

Figur 1 zeigt ein Kupplungssystem 1 zur Verbindung eines Zugfahrzeugs, insbesondere eines Ackerschleppers mit einem Anhänger. Zugfahrzeugseitig weist das Kupplungssystem 1 eine Tragplatte 2 auf, die in fahrzeugfesten Führungsschienen 3 vertikal verschiebbar gehalten ist. In der Tragplatte 2 sind Haltebolzen 4 verdrehbar gehalten, die endseitig ebene Führungsflächen 5 aufweisen. Diese Führungsflächen 5 sind in der dargestellten Freigabestellung der Haltebolzen 4 längs zu den Führungsschienen 3 frei verschiebbar, so daß die Tragplatte 2 in ihrer Höhenlage beliebig eingestellt werden kann. Durch Verdrehen der Haltebolzen 4 um ihre Längsachse greifen Zylinderflächen 6 der Haltebolzen 4 in entsprechend geformte, nicht dargestellte Ausnehmungen der U-förmigen Führungsschienen 3 ein und arretieren die Tragplatte 2. Auf diese Weise wird eine stufige Höhenverstellung der Tragplatte 2 realisiert. Eine Feder 7 spannt die Haltebolzen 4 in die nicht dargestellte Arretierstellung vor.

An der Tragplatte 2 ist mittels Schrauben 8 eine Anbauplatte 9 festgelegt, die in etwa L-förmig geformt ist. An einen in etwa horizontal liegenden Flansch 10 der Anbauplatte 9 ist ein Kugelkopf 11 festgelegt, der zur Verbindung mit einer nicht dargestellten Anhängerdeichsel dient. Die Anhängerdeichsel weist zu diesem Zweck eine Kugelkalotte 12 auf, die passend zum Kugelkopf 11 ausgebildet ist. Zum Sichern der Kugelkalotte 12 und damit der nicht dargestellten Anhängerdeichsel ist an der Anbauplatte 9 ein Niederhalter 13 vorgesehen, der oberseitig gegen die Kugelkalotte 12 drückt. Der Niederhalter 13 ist an einer Welle 14 verschwenkbar gehalten, die mit einem Handhebel 15 verbunden ist. Die Welle 14 kann mittels einer Sperrklinke 16 arretiert werden, um ein ungewolltes Lösen des Niederhalters 13 zu verhindern.

Am Flansch 10 der Anbauplatte 9 ist mittels lösbarer Haltemittel in Form von Schrauben 17 ein Träger 18 lösbar festgelegt. Dieser Träger 18 ist im wesentlichen horizontal ausgerichtet und geringfügig Z-förmig nach oben gebogen.

In den beiden Endbereichen sind Bohrungen 19 im Träger 18 vorgesehen, in denen Kupplungsköpfe 20 in Form von Kugelköpfen gehalten sind. Die Kupplungsköpfe 20 weisen hierzu Gewindeschäfte 21 auf, die mit Muttern 22 am Träger 18 festgelegt sind. Die Kupplungsköpfe 20 dienen zur Verbindung mit einem Kupplungsglied 23 in Form einer Kugelkalotte. Dieses Kupplungsglied 23 ist mit einer Zwangslenkung des nicht dargestellten Anhängers verbunden.

Auf dem Träger 18 sind außerdem Niederhalter 24 gehalten, die um eine Achse 25 verschwenkbar am Träger 18 abgestützt sind. Diese Niederhalter 24 sorgen für eine sichere Verbindung des Kupplungsglieds 23 mit dem Kupplungskopf 20.

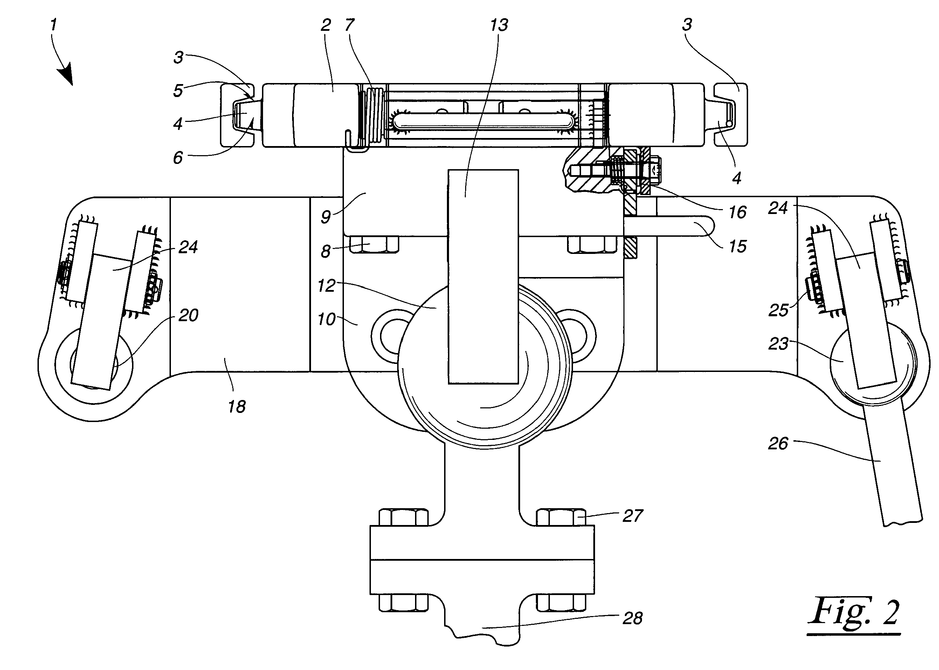

Die Figur 2 zeigt eine zugeordnete Darstellung des Kupplungssystems 1 gemäß Figur 1 von oben. Aus dieser Perspektive ist zu ersehen, daß die Niederhalter 24 der Kupplngsglieder 20 zum Niederhalter 13 in einem Winkel von etwa 10° angestellt sind. Auf diese Weise ergibt sich ein günstigerer Eingriffswinkel für eine Zwangslenkungsdeichsel 26. Aus der Figur 2 ist außerdem zu ersehen, daß die Kugelkalotte 12 mittels lösbarer Haltemittel in Form von Schrauben 27 mit einer Deichsel 28 verbunden ist.

Alternativ zur Darstellung gemäß den Figuren 1 und 2 ist auch daran gedacht, am Flansch 10 nur einen Kupplungskopf 20 vorzusehen. Dies kann beispielsweise durch Wenden des Trägers 18 realisiert werden. Alternativ könnte der Träger 18 entsprechend den Figuren 1 und 2 ausgebildet sein, wobei nur ein Endbereich mit dem Kupplungskopf 20 ausgerüstet ist.

### Bezugszeichenliste

- 1: Kupplungssystem
- 2: Tragplatte
- 3: Führungsschiene
- 4: Haltebolzen
- 5: Führungsfläche
- 6: Zylinderfläche
- 7: Feder
- 8: Schraube
- 9: Anbauplatte
- 10: Flansch
- 11: Kugelkopf
- 12: Kugelkalotte
- 13: Niederhalter
- 14: Welle
- 15: Handhebel
- 16: Sperrklinke
- 17: Schraube
- 18: Träger
- 19: Bohrung
- 20: Kupplungskopf
- 21: Gewindeschaft
- 22: Mutter
- 23: Kupplungsglied
- 24: Niederhalter
- 25: Achse
- 26: Zwangslenkungsdeichsel
- 27: Schraube
- 28: Deichsel

## Patentansprüche

1. Kupplungssystem für ein Zugfahrzeug, insbesondere einen Ackerschlepper und einen Anhänger, der eine Deichsel (28) aufweist, wobei das Kupplungssystem (1) eine Tragplatte (2) aufweist, die höhenverstellbar am Zugfahrzeug abgestützt ist und einen Kugelkopf (11) trägt, der mit einer an der Deichsel (28) festgelegten Kalotte (12) verbindbar ist, **dadurch gekennzeichnet, daß** an der höhenverstellbaren Tragplatte (2) mindestens ein Kupplungskopf (20) abgestützt ist, der mit einem anhängerseitigen Kupplungsglied (23) verbindbar ist, welches mit einer Lenkung des Anhängers in Wirkverbindung steht.

2. Kupplungssystem nach Anspruch 1, **dadurch gekennzeichnet, daß** der Kupplungskopf (20) von einer Kugel und das Kupplungsglied (23) von einer Kalotte (12) gebildet ist.

3. Kupplungssystem nach Anspruch 1 oder 2, **dadurch gekennzeichnet, daß** der Kupplungskopf (20) lösbar an der Tragplatte (2) festgelegt ist.

4. Kupplungssystem nach Anspruch 3, **dadurch gekennzeichnet, daß** der Kupplungskopf (20 wahlweise links- oder rechtsseitig zum Kugelkopf (11) an der Tragplatte (2) festlegbar ist.

5. Kupplungssystem nach mindestens einem der Ansprüche 1 bis 3, **dadurch gekennzeichnet, daß** mindestens zwei Kupplungsköpfe (20) beidseitig zum Kugelkopf (11) vorgesehen sind.

6. Kupplungssystem nach mindestens einem der Ansprüche 1 bis 5, **dadurch gekennzeichnet, daß** der Kupplungskopf (20) und/oder der Kugelkopf (11) an einer Anbauplatte (9) gehalten ist, die an der Tragplatte (2) festlegbar ist.

7. Kupplungssystem nach Anspruch 6, **dadurch gekennzeichnet, daß** die Anbauplatte (9) über eine Schraub- oder Stiftverbindung an der Tragplatte (2) gehalten ist.

8. Kupplungssystem nach mindestens einem der Ansprüche 1 bis 7, **dadurch gekennzeichnet, daß** die Tragplatte (2) mindestens eine Sicherung (13, 24) für den Kugelkopf (11) und/oder den Kupplungskopf (20) trägt.
